# EUROPÄISCHE PATENTSCHRIFT

(11) **EP 1 345 688 B1**
(45) Veröffentlichungstag und Bekanntmachung des Hinweises auf die Patenterteilung: **28.12.2005**
(21) Anmeldenummer: 01984697.1
(22) Anmeldetag: 12.12.2001
(51) Int. Cl.: B01J 20/06, B01J 20/30, C01G 49/02

(54) **VERFAHREN ZUR HERSTELLUNG EINES EISENHALTIGEN SORPTIONSMATERIALS**
METHOD FOR PRODUCING A SORPTION MATERIAL THAT CONTAINS IRON
PROCEDE DE PRODUCTION D'UN MATERIAU ADSORBANT A BASE DE FER

(30) Priorität: 13.12.2000 DE 10061800
(43) Veröffentlichungstag der Anmeldung: 24.09.2003
(73) Patentinhaber: GEH Wasserchemie GmbH & Co. KG, 49076 Osnabrück (DE)
(72) Erfinder: DRIEHAUS, Wolfgang, 49143 Bissendorf (DE)
(74) Vertreter: Scheffler, Jörg
(86) Internationale Anmeldenummer: PCT/DE2001/004666
(87) Internationale Veröffentlichungsnummer: WO 2002/047811

(56) Entgegenhaltungen:
- DE-A- 4 320 003
- DE-A- 19 745 664
- US-A- 4 459 276

## Beschreibung

Die Erfindung betrifft ein Verfahren zur Herstellung eines eisenhaltigen Sorptionsmaterials für die Behandlung von Wasser oder Abwasser, bei dem in einer eisenhaltigen Lösung ein bestimmter Salzgehalt eingestellt und dadurch in eine eisenoxidhaltige Suspension überführt wird, aus deren Feststoffanteil das Sorptionsmaterial gewonnen wird.

Es ist bereits seit einigen Jahren bekannt, die Adsorptionseigenschaften von Eisenhydroxid in technischen Systemen zu nutzen. Dazu werden Stoffe als Granulate eingesetzt, die Eisen als Metall oder als Oxid bzw. Hydroxid enthalten. Diese Granulate werden als Filterbett in einfachen Filterbehältern oder speziellen Reaktoren eingesetzt, wobei das zu reinigende Wasser oder Abwasser das Filterbett durchströmt, um so schädliche gelöste Spurenstoffe durch Anlagerung an der Oberfläche des Materials aus dem Wasser oder Abwasser zu entfernen.

Weiterhin sind auch Verfahren bekannt, bei denen zu dem gleichen Zweck Fällungsverfahren eingesetzt werden, bei welchen dem Wasser oder Abwasser eine gelöste Eisenverbindung zugesetzt wird. Durch eine nachfolgende Hydrolyse werden Eisenhydroxidflocken gebildet, an denen sich die Schadstoffe anlagern. Die Flocken werden anschließend aus dem Wasser oder Abwasser entfernt. Hierbei ist jedoch ein erheblicher Steuerungs- und Überwachungsaufwand erforderlich, um einen gleichbleibenden Reinigungseffekt des Wassers oder Abwassers sicherzustellen.

Durch die DE 43 20 003 A 1 ist beispielsweise auch ein Verfahren zur Entfernung von gelöstem Arsen mittels festem Eisenhydroxid bei der Wasserreinigung bekannt. Das Eisenhydroxid läßt sich dabei einerseits aus der Suspension gewinnen, indem zu einer sauren Eisensalzlösung eine der Stöchiometrie entsprechende Menge einer Lauge hinzugegeben wird, bis der pH-Wert im neutralen Bereich zwischen 6 und 8 stabil bleibt. Die Suspension wird anschließend gewaschen und steht dann für die Konditionierung von Festbettreaktionsfiltern zur Verfügung. Weiterhin kann die Suspension zusätzlich nach der Herstellung durch Zentrifugation in ein Hydroxidgel überführt werden. Anschließend wird eine Gefrierkonditionierung bei Temperaturen unterhalb von -5°C durchgeführt, um das Gel so in ein granuliertes Material zu überführen, welches unmittelbar in Festbettreaktionsfiltern eingesetzt werden kann. Als nachteilig bei diesem Verfahren hat sich in der Praxis die Beschaffenheit des granulierten Materials erwiesen, weil das Material vergleichsweise weich und feinkörnig ist. Dadurch tritt bei einer Rückspülung des mit dem Material gefüllten Filters ein erheblicher Materialverlust auf. Daher muß bei jeder Rückspülung neues Material hinzugefügt werden, wodurch der Aufwand zur Durchführung des Verfahrens wesentlich erhöht wird. Zudem muß das zu behandelnde Wasser oder Abwasser relativ sauber sein, da anderenfalls Abscheidungen von festen Bestandteilen des Wassers an dem Granulat durch die Filterwirkung auftreten und damit die Entfernung der gewünschten Bestandteile behindert wird.

Die DE 197 45 664 A 1 offenbart bereits ein Verfahren zur Herstellung eines Granulates für die Reinigung eines arsenhaltigen Fluides. Das Granulat wird im wesentlichen aus Quarzsand und Eisenpulver oder Eisenspänen durch Brennen bei hohen Temperaturen hergestellt. Im dem nachfolgenden Prozeß zur Arsenentfernung muß dieses Granulat zunächst durch gelösten Sauerstoff aktiviert werden, um so eine Oxidation durch die Reaktion mit dem Sauerstoff und dem Wasser zu bewirken, bei der sich Eisenhydroxid bildet. In dieser oxidierten Form wird eine Anlagerung von Arsen an dem Granulat ermöglicht, um das unerwünschte Arsen so aus dem Wasser oder Abwasser zu entfernen. Als nachteilig hat sich hierbei der hohe Energieaufwand bei der Herstellung erwiesen, insbesondere verursacht durch die hohen Prozeßtemperaturen. Weiterhin wird das zu behandelnde Wasser oder Abwasser durch die Reaktion des metallischen Eisens zu Eisenhydroxid verändert, weil dabei Sauerstoff aus dem Wasser gebunden und der pH-Wert des Wassers durch Abgabe von H⁺-Ionen gesenkt wird. Durch die geringen enthaltenen Eisenmengen ist zudem die Aufnahmefähigkeit des Materials begrenzt. Zudem muß eine vergleichsweise lange Kontaktzeit zwischen dem Wasser mit dem Granulat vorgesehen werden, so daß die entsprechenden Filteranlagen sehr groß und damit unwirtschaftlich ausgelegt sein müssen.

Ferner beschreibt die DE 198 34 916 A 1 ein Filterpapier für die Wasserreinigung, welches u. a. Eisenoxid und Eisenhydroxid enthält und beispielsweise zur Reinigung von arsenhaltigem Wasser angewendet werden kann. Beschrieben wird beispielsweise die ein- oder mehrmalige Aufgabe des verunreinigten Wassers auf das Filterpapier oder der Einsatz von Filterpapierstücken in Reaktoren oder Filterbehältern. Dabei hat es sich in der Praxis als nachteilig erwiesen, daß mit der technischen Realisierung erhebliche Schwierigkeiten verbunden sein können, da die Filterpapiere unter dem Druck des durchfließenden Wassers verkleben können und einen dichten, wenig permeablen Filterkörper bilden.

Der Erfindung liegt die Aufgabe zugrunde, ein Verfahren der eingangs genannten Art derart auszuführen, daß das Sorptionsmaterial mit geringem Aufwand hergestellt werden kann und zudem einen einfachen und wirtschaftlichen Einsatz bei einem zugleich hohen Wirkungsgrad gestattet.

Diese Aufgabe wird erfindungsgemäß mit einem Verfahren zur Herstellung eines eisenhaltigen Sorptionsmaterials gemäß den Merkmalen des Patentanspruchs 1 gelöst. Die weitere Ausgestaltung des erfindungsgemäßen Verfahrens ist den Unteransprüchen zu entnehmen.

Erfindungsgemäß ist also ein Verfahren vorgesehen, bei dem die eisenhaltigen Feststoffanteile durch eine relative Druckerhöhung der Suspension bei einer Temperatur unterhalb von 5 °C zu Feststoffkomplexen geformt werden. Hierdurch wird mit dem Verfahren ein Sorptionsmaterial geschaffen, dessen Feststoffkomplexe ein hohes Maß an Formstabilität aufweisen, so daß diese selbst unter dem Einfluß eines hohen Flüssigkeitsdruckes nicht zu einem Verkleben oder einem Verstopfen der Zwischenräume neigen. Dabei können insbesondere auch stark verschmutzte Abwässer mit dem Sorptionsmaterial behandelt werden, ohne daß hierbei eine den Wirkungsgrad herabsetzende Anlagerung von Schmutzpartikeln des Abwassers zu befürchten ist. Weiterhin ist es bei dem Herstellungsverfahren nicht erforderlich, vor dem Einsatz des Sorptionsmaterials eine Aktivierung vorzunehmen, so daß einerseits die Anwendung des Sorptionsmaterials wesentlich erleichtert wird, andererseits unerwünschte Einflüsse auf die Beschaffenheit des Wassers oder Abwassers, insbesondere eine Veränderung des pH-Wertes, ausgeschlossen sind. Weiterhin ist der Steuerungs- und Überwachungsaufwand beim Einsatz des durch das Verfahren hergestellten Sorptionsmaterials deutlich vermindert, da hierbei insbesondere eine Überwachung des Sorptionsmaterials nicht erforderlich ist. Außerdem weist das derart hergestellte Sorptionsmaterial aufgrund der weitgehenden Vermeidung von Füll- bzw. Hilfsstoffen einen hohen Anteil an Eisenoxid bzw. Eisenhydroxid auf. Die Feststoffkomplexe weisen dabei in der Praxis einen Durchmesser zwischen 0,1 und ca. 3 mm auf.

Eine besonders vorteilhafte Ausgestaltung des erfindungsgemäßen Verfahrens wird dadurch erreicht, daß die Feststoffkomplexe durch die Druckerhöhung zu formstabilen Körnern geformt werden. Hierdurch wird die Handhabbarkeit und damit der industrielle Einsatz wesentlich erleichtert, so daß insbesondere eine Steigerung der Wirtschaftlichkeit erreicht wird. Dabei kann durch die Steuerung des Druckverlaufes bzw. des maximalen Druckes eine gezielte Beeinflussung der Körnerbeschaffenheit erreicht werden, um so eine Anpassung an individuelle Einsatzbedingungen zu ermöglichen.

Dabei ist es besonders günstig, wenn die Druckerhöhung in einem Druckbereich zwischen 4*10⁷ Pa und 10⁸ Pa vorgenommen wird. Hierbei hat sich in der Praxis herausgestellt, daß zusätzlich zu der Verbindung von Eisenhydroxidpartikeln zu Eisenhydroxidkörnern, welche bereits eine sehr hohe Formstabilität aufweisen, auch Kristallisationsvorgänge stattfinden, durch die eine weitere Verbesserung der physikalischen Eigenschaften der Eisenhydroxidkörner erreicht wird.

Besonders gut eignet sich auch eine Abwandlung, bei welcher der Feststoffgehalt der Suspension mindestens 10 % beträgt. Hierdurch werden Feststoffkomplexe darstellbar, die ein hohes Reaktionsvermögen aufweisen und zudem die gewünschten mechanischen Eigenschaften, die für einen breit angelegten Einsatz bei industriellen Anwendungen geeignet sind. Dabei sind in optimaler Weise auch Feststoffgehalte von 15 % bis 25 % für eine wirtschaftliche Anwendung geeignet.

Eine ebenfalls besonders effektive Ausgestaltung des erfindungsgemäßen Verfahrens wird dann erreicht, wenn im Anschluß an die Druckerhöhung zur Erhöhung der Formstabilität der Feststoffkomplexe eine Druckentlastung vorgenommen wird. Durch die Steuerung der Druckentlastung lassen sich gezielt die gewünschten Geometrien sowie Oberflächeneigenschaften der Feststoffkomplexe erreichen. Die Druckentlastung bezieht sich dabei insbesondere auf die vorangegangene Druckerhöhung, so daß diese unabhängig vom Umgebungsdruck bestimmt wird.

Eine besonders vorteilhafte Weiterbildung des erfindungsgemäßen Verfahrens wird auch dadurch erreicht, daß die Feststoffkomplexe getrocknet werden. Hierdurch kann das Sorptionsmaterial unmittelbar im Anschluß an das Herstellungsverfahren der bestimmungsgemäßen Verwendung zugeführt werden. Dabei wird insbesondere eine unbeabsichtigte Verformung der Feststoffkomplexe im Anschluß an die druckbedingte Formgebung aufgrund unerwünschter Umgebungseinflüsse vermieden.

Dabei ist es auch besonders zweckmäßig, wenn die Feststoffkomplexe zur Trocknung erwärmt werden, um so eine schnelle Feuchtigkeitsabfuhr zu erreichen. In der Praxis konnten dabei auch Verbesserungen der Feststoffkomplexe beobachtet werden. Hintergrund ist auch hierbei eine Umgruppierung von Bestandteilen der Feststoffkomplexe, deren Verlauf wesentlich durch die Temperatureinflüsse bestimmt werden können.

Besonders praxisnah ist es auch, wenn zur Trocknung Luft eingeleitet wird. Hierdurch wird der Energieaufwand zur Herstellung verringert, wobei auch solche Abwandlungen denkbar sind, bei denen das zur Trocknung eingesetzte gasförmige Medium seinerseits als Träger von reaktiven Stoffen dient.

Eine weitere besonders zweckmäßige Ausgestaltung des erfindungsgemäßen Verfahrens wird auch dadurch erreicht, daß die Feststoffkomplexe mit einer kationenhaltigen Aktivierungslösung behandelt werden. Hierdurch tritt eine Veränderung der Polarisierung an der Oberfläche der Feststoffkomplexe ein, wodurch der Adsorptionsvorgang der unerwünschten Schadstoffe aus dem Wasser oder Abwasser weiter gesteigert werden kann.

## Patentansprüche

1. Verfahren zur Herstellung eines eisenhaltigen Sorptionsmaterials für die Behandlung von Wasser oder Abwasser, bei dem in einer eisenhaltigen Lösung ein bestimmter Salzgehalt eingestellt und **dadurch** in eine eisenoxidhaltige Suspension überführt wird, aus deren Feststoffanteil das Sorptionsmaterial gewonnen wird, **dadurch gekennzeichnet, daß** die eisenhaltigen Feststoffanteile durch eine relative Druckerhöhung der Suspension bei einer Temperatur unterhalb von 5 °C zu Feststoffkomplexen geformt werden.

2. Verfahren nach Anspruch 1, **dadurch gekennzeichnet, daß** die Feststoffkomplexe durch die Druckerhöhung zu formstabilen Körnern geformt werden.

3. Verfahren nach den Ansprüchen 1 oder 2, **dadurch gekennzeichnet, daß** die Druckerhöhung in einem Druckbereich zwischen 4*10⁷ Pa und 10⁸ Pa vorgenommen wird.

4. Verfahren nach zumindest einem der vorhergehenden Ansprüche, **dadurch gekennzeichnet, daß** der Feststoffgehalt der Suspension mindestens 10 % beträgt.

5. Verfahren nach zumindest einem der vorhergehenden Ansprüche, **dadurch gekennzeichnet, daß** im Anschluß an die Druckerhöhung zur Erhöhung der Formstabilität der Feststoffkomplexe eine Druckentlastung vorgenommen wird.

6. Verfahren nach zumindest einem der vorhergehenden Ansprüche, **dadurch gekennzeichnet, daß** die Feststoffkomplexe getrocknet werden.

7. Verfahren nach Anspruch 6, **dadurch gekennzeichnet, daß** die Feststoffkomplexe zur Trocknung erwärmt werden.

8. Verfahren nach den Ansprüchen 6 oder 7, **dadurch gekennzeichnet, daß** zur Trocknung Luft eingeleitet wird.

9. Verfahren nach zumindest einem der vorhergehenden Ansprüche, **dadurch gekennzeichnet, daß** die Feststoffkomplexe mit einer kationenhaltigen Aktivierungslösung behandelt werden.

## Claims

1. Process for producing an iron-containing sorption material for treating water or effluent, wherein a specific salt content is adjusted in an iron-containing solution and the solution is consequently transformed into an iron oxide-containing suspension, from the solids content of which the sorption material is obtained, **characterised in that** the iron-containing solids contents are formed into solid complexes by a relative pressure increase of the suspension at a temperature of less than 5°C.

2. Process according to claim 1, **characterised in that** the pressure increase causes the solid complexes to be formed into dimensionally stable particles.

3. Process according to claim 1 or 2, **characterised in that** the pressure is increased in a range of between 4*10⁷ Pa and 10⁸ Pa.

4. Process according to at least one of the preceding claims, **characterised in that** the suspension has a solids content of at least 10%.

5. Process according to at least one of the preceding claims, **characterised in that**, subsequent to the pressure increase, a pressure release is effected to enhance the dimensional stability of the solid complexes.

6. Process according to at least one of the preceding claims, **characterised in that** the solid complexes are dried.

7. Process according to claim 6, **characterised in that** the solid complexes are dried by heating.

8. Process according to claim 6 or 7, **characterised in that** air is introduced for the purpose of drying.

9. Process according to at least one of the preceding claims, **characterised in that** the solid complexes are treated with a cation-containing activating solution.

## Revendications

1. Procédé pour la production d'un matériau d'adsorption contenant du fer pour le traitement de l'eau ou d'eaux usées, dans lequel une solution contenant du fer est réglée à une teneur déterminée en sel et ainsi transformée en une suspension contenant de l'oxyde de fer, le matériau d'adsorption étant obtenu à partir de la proportion solide de ladite suspension, **caractérisé en ce que** les proportions solides contenant du fer sont façonnées en complexes solides par une augmentation relative de la pression de la suspension à une température inférieure à 5°C.

2. Procédé selon la revendication 1, **caractérisé en ce que** les complexes solides sont façonnés en grains de forme stable par l'augmentation de pression.

3. Procédé selon les revendications 1 ou 2, **caractérisé en ce que** l'augmentation de pression est réalisée dans une plage de pression entre 4*10⁷ Pa et 10⁸ Pa.

4. Procédé selon au moins l'une quelconque des revendications précédentes, **caractérisé en ce que** la teneur en solides de la suspension est d'au moins 10%.

5. Procédé selon au moins l'une quelconque des revendications précédentes, **caractérisé en ce qu'**on procède à une détente de la pression après l'augmentation de la pression pour augmenter de stabilité de forme des complexes solides.

6. Procédé selon au moins l'une quelconque des revendications précédentes, **caractérisé en ce que** les complexes solides sont séchés.

7. Procédé selon la revendication 6, **caractérisé en ce que** les complexes solides sont séchés par chauffage.

8. Procédé selon les revendications 6 ou 7, **caractérisé en ce que** de l'air est introduit en vue du séchage.

9. Procédé selon au moins l'une quelconque des revendications précédentes, **caractérisé en ce que** les complexes solides sont traités par une solution d'activation contenant des cations.
